# EUROPÄISCHE PATENTSCHRIFT

(11) **EP 2 507 563 B1**
(45) Veröffentlichungstag und Bekanntmachung des Hinweises auf die Patenterteilung: **08.02.2017**
(21) Anmeldenummer: 10788058.5
(22) Anmeldetag: 01.12.2010
(51) Int. Cl.: F24J 2/05, F24J 2/07

(54) **ABSORBERROHR**
ABSORBER TUBE
TUYAU ABSORBEUR

(30) Priorität: 04.12.2009 DE 102009047548
(43) Veröffentlichungstag der Anmeldung: 10.10.2012
(73) Patentinhaber: Schott Solar AG, 55122 Mainz (DE)
(72) Erfinder: KUCKELKORN, Thomas, 07743 Jena (DE)
(74) Vertreter: Mehler Achler
(86) Internationale Anmeldenummer: PCT/EP2010/068640
(87) Internationale Veröffentlichungsnummer: WO 2011/067289

(56) Entgegenhaltungen:
- WO-A2-2011/039281
- CN-A- 101 270 923
- CN-Y- 201 122 006
- DE-B3-102005 022 183
- DE-B3-102005 057 276
- DE-T2- 69 309 453

## Beschreibung

Die vorliegende Erfindung betrifft ein Absorberrohr, insbesondere für Sonnenkollektoren in solarthermischen Kraftwerken mit mindestens einem Kollektorspiegel, umfassend ein Metallrohr zum Durchleiten und Erhitzen eines Wärmeträgermediums, ein das Metallrohr umgebendes Hüllrohr zum Ausbilden eines evakuierbaren Ringraumes, und einen ersten, im Ringraum angeordneten und mit Schutzgas befüllten Behälter, wobei der erste Behälter eine Auslassöffnung aufweist, die mit einem Verschlussmaterial verschlossen ist, welches die Auslassöffnung unter äußerer Einwirkung zum Einleiten des Schutzgases in den Ringraum freigibt, wobei die äußere Einwirkung von einer aktivierbaren Öffnungseinheit zum Freigeben der Auslassöffnungen aufbringbar ist, und einen Außenring und ein Übergangselement, die das Metallrohr zum Abdichten des Ringraums umschließen.

Sonnenkollektoren können beispielsweise mit einem Parabolspiegel, auch Kollektorspiegel genannt, ausgestattet werden und in so genannten Parabolrinnen-Kraftwerken eingesetzt werden. In bekannten Parabolrinnen-Kraftwerken wird als Wärmeträgermedium ein Thermoöl eingesetzt, das mithilfe der von den Parabolspiegeln reflektierten und auf das Absorberrohr fokussierten Sonnenstrahlen bis ca. 400°C erhitzt werden kann. Das erhitzte Wärmeträgermedium wird durch das Metallrohr durchgeleitet und einem Verdampfungsprozess zugeführt, mit dessen Hilfe die Wärmeenergie in elektrische Energie umgewandelt wird.

Das Absorberrohr besteht dabei in der Regel aus einem Metallrohr, weiches eine strahlungsabsorbierende Schicht aufweist und einem Hüllrohr aus Glas, welches das Metallrohr umgibt. Der dadurch gebildete Ringraum dient dazu, die Wärmeverluste an der äußeren Oberfläche des Metallrohres zu minimieren und so den Energieertrag zu steigern. Die einzelnen Absorberrohre sind bis zu 4 m lang und werden zu Solarfeldschleifen mit einer Gesamtlänge bis zu 200 m zusammengeschweißt. Derartige Absorberrohre sind beispielsweise aus der DE 102 31 467 B4 bekannt.

Das als Wärmeträgermedium verwendete Thermoöl setzt mit zunehmender Alterung freien Wasserstoff frei, der im Thermoöl gelöst ist. Die Menge des gelösten Wasserstoffes hängt zum einen vom verwendeten Thermoöl und den Betriebsbedingungen des Ölkreislaufs, zum anderen aber auch von der Menge Wasser, weiches mit dem Thermoöl in Berührung kommt, ab. Insbesondere durch Leckagen in Wärmetauschern kann eine Berührung mit Wasser häufiger vorkommen. Der freigewordene Wasserstoff gelangt infolge von Permeation durch das Metallrohr hindurch in den evakuierten Ringraum, wobei die Permeationsrate mit steigender Betriebstemperatur des Metallrohres ebenfalls zunimmt. Als Folge davon steigt auch der Druck im Ringraum, was eine Erhöhung der Wärmeleitung durch den Ringraum zur Folge hat, die wiederum zu Wärmeverlusten und zu einem geringeren Wirkungsgrad des Absorberrohres bzw. des Sonnenkollektors führt.

Um den Druckanstieg im Ringraum zumindest zu reduzieren und damit die Lebensdauer des Absorberrohres zu verlängern, kann der in den Ringraum gelangte Wasserstoff durch Gettermaterialien gebunden werden. Die Aufnahmekapazität der Gettermaterialien ist aber begrenzt. Nach Erreichen der maximalen Beladungskapazität steigt der Druck im Ringraum solange an, bis dass er im Gleichgewicht mit dem Partialdruck des freien, aus dem Thermoöl in den Ringraum gelangten Wasserstoffes ist. Durch den Wasserstoff entsteht eine erhöhte Wärmeleitung im Ringraum mit den oben genannten nachteiligen Folgen für den Wirkungsgrad des Sonnenkollektors.

Absorberrohre, welche im Ringraum mit Gettermaterialien versehen sind, sind beispielsweise aus der WO 2004/063640 A1 bekannt. Bei der hierin beschriebenen Vorrichtung befindet sich das Gettermaterial in Getterschienen, welche direkt der reflektierten Sonnenstrahlung ausgesetzt sind und sich daher erwärmen. Da die Getterschienen im evakuierten Ringraum thermisch nahezu getrennt vom Metallrohr und von Hüllrohr sind, kann die Temperatur der Schiene und damit auch des Gettermaterials stark schwanken, womit auch die Aufnahmekapazität des Gettermaterials schwankt, weshalb es zu unerwünschten ungleichmäßigen Druckverhältnissen im Ringraum kommt.

Aus der DE 10 2005 057 276 B3 ist ein Absorberrohr bekannt, bei dem Edelgas in den Ringraum eingeleitet wird, wenn die Kapazität des Gettermaterials erschöpft ist. Viele Edelgase weisen eine geringe Wärmeleitfähigkeit auf, so dass die Wärmeleitung durch den Ringraum trotz der Anwesenheit von Wasserstoff reduziert werden kann, so dass sich der Wirkungsgrad des Sonnenkollektors bei eingeleitetem Edelgas gegenüber dem evakuierten Metallrohr nur um ca. 1 % reduziert. Die in der DE 10 2005 057 276 B3 beschriebenen Ausgestaltungen der Edelgasbehälter sind im Wesentlichen nur theoretischer Natur, technisch nur sehr kompliziert herstellbar und daher praktisch kaum umsetzbar. Insbesondere enthält diese Schrift keine praktikable Anleitung, wie die Edelgasbehälter ausgestaltet und angeordnet sein können, damit sie zum gegebenen Zeitpunkt einfach zu öffnen sind. Ferner wird hierin keine Aussage über die Anordnung des Gettermaterials im Ringraum in Bezug auf die Edelgasbehälter gemacht.

Aufgabe der vorliegenden Erfindung ist es daher, die aus dem Stand der Technik bekannten Absorberrohre so weiterzuentwickeln, dass sie einfacher zu fertigen sind, ohne ihre Funktionalität einzugrenzen, insbesondere, ohne die Lebensdauer herabzusetzen. Ferner soll die Einleitung der Edelgase in den Ringraum auf einfache Weise ermöglicht werden.

Gelöst wird die Aufgabe dadurch, dass der erste Behälter mittels einer Haltevorrichtung im Ringraum fixiert ist, wobei die Haltevorrichtung am Außenring und/oder am Übergangselement angeordnet ist, wobei die Haltevorrichtung ein oder mehrere Lötpunkte aus metallischem Lot umfasst, und dass mindestens einer der Lötpunkte zum Fixieren des ersten Behälters im Ringraum auch die Auslassöffnung verschließt.

Unter äußerer Einwirkung soll hier verstanden werden, dass diese außerhalb des Absorberrohres oder zumindest außerhalb des Ringraums und des Metallrohres und nicht durch den Betrieb des Absorberrohres erzeugt wird. Eine derartige äußere Einwirkung kann beispielsweise mechanischer Art sein. Die Anordnung der Haltevorrichtung ist vorzugsweise derart gewählt, dass die äußeren Einwirkungen von der Haltevorrichtung übertragen werden.

Die Öffnungseinheit kann in Form eines Druckknopfes realisiert werden, der mit der Auslassöffnung über die Haltevorrichtung in wirkender Verbindung steht. Wird dieser Druckknopf beispielweise durch das Wartungspersonal des Sonnenkollektors betätigt, wird die Auslassöffnung durchbrochen und freigegeben, so dass das Schutzgas in den Ringraum eingeleitet wird.

Vorzugsweise ist die äußere Einwirkung eine Wärmeeinwirkung. In dieser Ausgestaltung kann das Wartungspersonal mit einer mobilen Heizvorrichtung von außen das Absorberrohr in der Nähe der Auslassöffnungen, beispielsweise am Außenring, erwärmen, so dass das Verschlussmaterial unter der Wärmeeinwirkung schmilzt und die Auslassöffnung freigegeben wird. Die wirkende Verbindung der Haltevorrichtung ist in diesem Fall nicht nur mechanischer Art, sondern auch wärmeleitender Art. Vorzugsweise besteht die Haltevorrichtung in diesem Fall aus einem wärmeleitenden Material, beispielsweise einem Metall. Vorteilhaft an dieser Ausführung ist, dass die Öffnungseinheit keine zusätzlichen Bauteile erfordert und dass die mobile Heizeinrichtung für alle Absorberrohre des solarthermischen Kraftwerks verwendbar ist.

Vorzugsweise ist die Auslassöffnung induktiv beheizbar und die Öffnungseinheit umfasst eine elektrische Spule und eine Metallscheibe. In dieser Ausgestaltung können die Auslassöffnungen automatisch geöffnet und das Schutzgas automatisch in den Ringraum eingeleitet werden, da die elektrische Spule an eine Steuerungseinheit angeschlossen werden kann, welche die elektrische Spule beim Eintreten vorgebbarer Ereignisse aktiviert. Es ist daher nicht notwendig, dass die Auslassöffnungen mithilfe des Wartungspersonals geöffnet werden, wodurch die Personalkosten für den Betrieb der Anlage verringert werden können. In diesem Fall spielt das Material, aus dem die Haltevorrichtung gefertigt ist, keine Rolle.

Erfindungsgemäß umfasst die Haltevorrichtung einen oder mehrere Lötpunkte bestehend aus einem metallischen Lot. Lötpunkte lassen sich sehr einfach und günstig herstellen. Das metallische Lot wird so gewählt, dass es bei den im Betrieb des Sonnenkollektors herrschenden Temperaturen nicht schmilzt. Hier kann ein Hartlot verwendet werden, das erst ab Temperaturen über 400°C schmilzt.

Erfindungsgemäß besteht das Verschlussmaterial aus metallischem Lot. Das metallische Lot ist dasselbe, welches für die Lötpunkte in der Haltevorrichtung eingesetzt wird. Dadurch werden die Materialvielfalt und die Wahrscheinlichkeit von Fertigungsfehlern bei der Herstellung der Absorberrohre infolge von Materialvertauschung reduziert.

Erfindungsgemäß verschließt mindestens einer der Lötpunkte zum Fixieren des ersten Behälters im Ringraum auch die Auslassöffnung. In diesem Fall übernimmt einer der Lötpunkte zwei Funktionen: Zum einen hat er eine Haltefunktion, da er den ersten Behälter in seiner Position im Ringraum fixiert. Zum anderen hat er eine Verschlussfunktion, da das Lot auch gleichzeitig das Verschlussmaterial für die Auslassöffnungen darstellt.

Eine besonders bevorzugte Ausgestaltung des erfindungsgemäßen Absorberrohres zeichnet sich durch einen zweiten, mit einem Gettermaterial zum Binden von freiem Wasserstoff gefüllten und im Ringraum angeordneten Behälter aus. Die erfindungsgemäße Lösung mit zwei Behältern, von denen einer mit dem Gettermaterial und der andere mit Schutzgas befüllt sind, ist aus fertigungstechnischer Sicht vorteilhaft, da die beiden Behälter bereits fertig vormontiert und befüllt werden können, bevor sie in den Ringraum eingesetzt werden.

Vorzugsweise ist der zweite Behälter mittels der Haltevorrichtung im Ringraum befestigt. Je nach Anordnung des ersten und des zweiten Behälters kann bestimmt werden, ob beide oder nur einer der Behälter mit der Haltevorrichtung fixiert werden. Besondere Tragevorrichtungen, wie etwa Getterschienen, wie sie in der WO 2004/063640 A1 beschrieben sind, werden nicht benötigt.

In einer vorteilhaften Ausbildung, weist der Außenring ein oder mehrere in den Ringraum hineinragende Vorsprünge zum Positionieren des ersten und/oder des zweiten Behälters auf. Das Übergangselement und der Außenring sind Bestandteil von aus dem Stand der Technik bekannten Dehnungsausgleichseinheiten, mit denen die unterschiedlichen Ausdehnungen des Hüllrohres und des Metallrohres im Betrieb des Absorberrohres ausgeglichen werden, so dass der Ringraum gasdicht abgeschlossen bleibt.

Alternativ ragt einer der Vorsprünge in die Auslassöffnung hinein und ist mit einer Markierung zum Kennzeichnen der Auslassöffnung versehen. Auch hier können die Vorsprünge so ausgestaltet sein, dass nur einer der Vorsprünge in die Auslassöffnung passt. Mithilfe des metallischen Lots wird die Auslassöffnung geschlossen und der entsprechende Behälter gleichzeitig am Außenring befestigt. Die Markierung der Auslassöffnung kann beispielsweise durch eine entsprechende Ausnehmung auf der Außenseite des Außenrings realisiert werden, so dass das Wartungspersonal weiß, an welcher Stelle die Heizvorrichtung zum Öffnen des Verschlussmaterials angesetzt werden muss.

Das erfindungsgemäße Absorberrohr wird vorteilhafterweise dadurch weitergebildet, dass der erste Behälter und der zweite Behälter ringförmig ausgestaltet sind und das Metallrohr umgeben. Die ringförmige Ausgestaltung der Behälter bewirkt zum einen, dass das Gettermaterial gleichmäßig im Ringraum verteilt ist und daher gleich gut zugänglich ist und den freien Wasserstoff barrierefrei aufnehmen kann, und zum anderen, dass die Behälter jeweils in sich geschlossene Einheiten bilden, was ihren Einbau und insbesondere ihre Positionierung im Ringraum erleichtert.

Vorzugsweise weisen der erste Behälter eine erste Fläche und der zweite Behälter eine zweite Fläche auf, an denen der erste und der zweite Behälter zu einem Bauteil verbindbar sind. Die beiden Behälter können so bereits vor dem Einsetzen in den Ringraum in der gewünschten Position zueinander miteinander verbunden werden, so dass sie gemeinsam in einem Arbeitsschritt in den Ringraum eingebracht werden können. In dieser Ausgestaltung wird die Herstellung der erfindungsgemäßen Absorberrohre weiter vereinfacht.

In einer bevorzugten Weiterentwicklung, in welcher das Absorberrohr eine Längsachse aufweist, erstrecken sich die erste Fläche und die zweite Fläche radial zur Längsachse, d. h. die Normalenvektoren der ersten Fläche und die der zweiten Fläche verlaufen parallel zur Längsachse. In dieser Weiterentwicklung können die beiden Behälter aus fertigungstechnischer Sicht besonders einfach miteinander verbunden werden und es ist insbesondere möglich, die beiden Behälter mit identischen Abmessungen zu versehen, so dass nur eine Behälterform gefertigt werden muss, was den Fertigungsaufwand weiter vereinfacht. Zu beachten ist hierbei nur, dass der Behälter für das Schutzgas gasdicht verschlossen sein muss, während der Behälter für das Gettermaterial so ausgestaltet sein muss, dass sich der freigesetzte Wasserstoff im Ringraum gut an das Gettermaterial anlagern kann.

Weiterhin zeichnet sich eine bevorzugte Ausgestaltung des erfindungsgemäßen Absorberrohres dadurch aus, dass die erste Fläche und die zweite Fläche sich koaxial zur Längsachse erstrecken, d. h. die Normalenvektoren der ersten Fläche und der zweiten Fläche verlaufen senkrecht zur Längsachse. In dieser Ausgestaltung kann beispielsweise der mit dem Schutzgas gefüllte erste Behälter schalenförmig in den zweiten, mit dem Gettermaterial befüllten Behälter eingeschoben werden. Da die beiden Behälter in dieser Ausgestaltung unterschiedliche Volumina aufweisen, kann dieser Umstand genutzt werden, um beispielsweise mehr Gettermaterial in den Ringraum einzubringen, wodurch die Aufnahmekapazität für freien Wasserstoff und damit die Lebensdauer des Absorberrohres erhöht wird.

In einer vorteilhaften Ausführungsform des erfindungsgemäßen Absorberrohres sind der erste Behälter als ein erster Ringabschnitt und der zweite Behälter als ein zweiter Ringabschnitt ausgestaltet und miteinander zu einem geschlossenen Ring verbindbar. Auch hier ist es möglich, das Verhältnis des Volumens des ersten Behälters zum Volumen des zweiten Behälters durch die Größe der Ringabschnitte an die spezifischen Gegebenheiten des jeweiligen Absorberrohres anzupassen, beispielsweise, um mehr Gettermaterial in den Ringraum einzubringen. Sollte sich herausstellen, dass ein größeres Volumen an Schutzgas vorteilhaft sein sollte, kann dies ebenfalls auf konstruktiv einfache Weise berücksichtigt werden.

Eine bevorzugte Ausgestaltung der vorliegenden Erfindung zeichnet sich dadurch aus, dass der erste Behälter einen oder mehrere erste Ringabschnitte und der zweite Behälter einen oder mehrere zweite Ringabschnitte aufweist, die separat voneinander im Ringraum fixierbar sind. Weder die ersten oder die zweiten Ringabschnitte noch der erste und der zweite Behälter sind in dieser Ausgestaltung untereinander verbunden. Sowohl das Gettermaterial als auch das Edelgas können also auf mehrere Ringabschnitte verteilt werden. Dabei muss die Anzahl der Ringabschnitte, die mit dem Gettermaterial befüllt sind, nicht gleich der Anzahl der Ringabschnitte sein, die mit Edelgas befüllt sind. Es wird eine flexiblere Anordnung ermöglicht, ferner kann man die benötigten Mengen an Gettermaterial und Edelgas einfach an den jeweiligen Anwendungsfall anpassen.

Vorzugsweise sind der erste Ringabschnitt und der zweite Ringabschnitt als Halbringe ausgestaltet. In dieser Ausgestaltung lassen sich die Ringabschnitte besonders einfach durch mittiges Trennen eines geschlossenen Ringes herstellen, so dass die Fertigung hier günstig und ohne größeren Ausschuss gestaltet werden kann.

In einer besonders bevorzugten Ausgestaltung, bei der das Absorberrohr eine dem Kollektorspiegel zugewandte Hälfte und eine dem Kollektorspiegel abgewandte Hälfte aufweist, ist der zweite Behälter in der dem Kollektorspiegel abgewandten Hälfte angeordnet. In der dem Kollektor abgewandten Hälfte des Absorberrohres herrschen im Betrieb des Sonnenkollektors durch Abschattung des Metallrohres geringere Temperaturen als in der dem Kollektorspiegel zugewandten Hälfte. Die Aufnahmekapazität des Gettermaterials für freien Wasserstoff steigt mit sinkender Temperatur. Die Anordnung des zweiten Behälters in der dem Kollektorspiegel abgewandten Hälfte führt daher dazu, dass der Ringraum länger frei von freiem Wasserstoff gehalten werden kann, so dass der Druck im Ringraum und damit die Wärmeleitung durch den Ringraum erst später steigt. Folglich kann der Sonnenkollektor länger mit dem maximalen Wirkungsgrad betrieben werden bzw. steigt die Lebensdauer des Absorberrohres.

Mithilfe der Vorsprünge kann die Position der Behälter im Ringraum bei der Fertigung auf einfache Weise festgelegt werden, so dass beispielsweise gewährleistet ist, dass sich der zweite Behälter auch in der dem Kollektorspiegel abgewandten Hälfte des Absorberrohres befindet. Dazu können die Behälter korrespondierende Ausnehmungen aufweisen, die so ausgestaltet sind, dass eine Ausnehmung nur zu einem Vorsprung passt, so dass die Anordnung des ersten und des zweiten Behälters relativ zum Außenring zweifelsfrei festgelegt ist.

Vorzugsweise weist das Übergangselement einen ersten Bereich mit einem ersten Durchmesser und einen zweiten Bereich mit einem zweiten Durchmesser auf. Das Übergangselement wird üblicherweise mit dem Außenring verschweißt. Der zum Schweißen notwendige Wärmeeintrag bewirkt, dass sich das Übergangselement nach außen wölbt. Ursache hierzu ist die thermische Längenausdehnung des Übergangselementes. Dies hat zur Folge, dass die Verbindung des Übergangselements mit dem Hüllrohr belastet wird und möglicherweise beschädigt werden kann. Mithilfe der zwei verschiedenen Durchmesser wird das Übergangselement versteift, so dass die Belastungen der Verbindung mit dem Hüllrohr beim Schweißen verringert werden. Die Verbindung wird daher geschont und nicht beschädigt. Der Außenring ist so gestaltet, dass er die Längenausdehnung infolge des Wärmeeintrages problemlos aufnehmen kann.

Vorzugsweise bestehen der Außenring aus Edelstahl und das Übergangselement aus Kovar. Kovar ist eine Eisen-Nickel-Kobalt-Legierung. Der Wärmeausdehnungskoeffizient des verwendeten Kovar kann auf den des verwendeten Glases für das Hüllrohr angepasst werden, so dass sich die Längenausdehnungen infolge der Wärmeentwicklung sowohl im Betrieb des Sonnenkollektors als auch bei der Fertigung des Absorberrohres, wenn das Übergangselement mit dem Außenring verschweißt wird, gegenseitig nicht negativ beeinflussen. Die Verwendung von Edelstahl für den Außenring vereinfacht das Verschweißen mit dem Federbalg. Kovar wird auch als 1.3981 nach DIN 17745 bezeichnet.

Ein weiterer Aspekt der vorliegenden Erfindung betrifft eine Vorrichtung zum Einleiten von Schutzgas in einen Ringraum eines Absorberrohres, umfassend ein Absorberrohr wie vorstehend beschrieben, eine Temperaturmesseinheit zum Ermitteln des Temperaturwertes eines Hüllrohres, eine Vergleichseinheit zum Vergleichen des ermittelten Temperaturwertes des Hüllrohres mit einem wählbaren kritischen Temperaturwert, und eine von der Vergleichseinheit aktivierbare Öffnungseinheit zum Freigeben der Auslassöffnungen zum Einleiten von Schutzgas in den Ringraum.

Mit dieser Vorrichtung ist es möglich, die Sonnenkollektoren automatisch zu überwachen und insbesondere die Einleitung des Schutzgases in den Ringraum dann vorzunehmen, wenn bestimmte Bedingungen erfüllt oder nicht mehr erfüllt sind.

In diesem Fall könnte eine Bedingung sein, dass der Temperaturwert des Hüllrohres einen wählbaren kritischen Wert übersteigt. Das Eintreten dieser Bedingung ist ein Zeichen dafür, dass die Wärmeleitung durch den Ringraum angestiegen ist und es daher zu Wärmeverlusten am Hüllrohr kommt. Folglich sollte nun das Schutzgas in den Ringraum eingeleitet werden, um die Wärmeverluste wieder zu minimieren.

Temperaturmesseinheiten können in Form von auf dem Hüllrohr angebrachten Temperatursensoren oder aber in Form von Wärmebildkameras realisiert werden. Insbesondere Wärmebildkameras haben den Vorteil, dass mit einer Wärmebildkamera eine Vielzahl von Hüllrohren hinsichtlich ihrer Temperatur überwacht werden können, ohne dass hier an jedem Hüllrohr ein gesonderter Temperatursensor angebracht und mit der Vergleichseinheit verbunden werden müsste. Die von der Wärmebildkamera gelieferten Bilder können mit einer speziellen Bildauswertungssoftware so interpretiert werden, dass die Temperaturwerte sämtlicher erfasster Hüllrohre ermittelt und der Vergleichseinheit zugeführt werden kann. Die Vergleichseinheit kann mit diesen Informationen für jedes Hüllrohr einen Vergleich zwischen dem ermittelten Temperaturwert und dem kritischen Temperaturwert vornehmen und je nach Ergebnis des Vergleichs die Öffnungseinheit zum Freigeben der Auslassöffnungen aktivieren. Mit dieser Vorrichtung ist gewährleistet, dass die Absorberrohre ständig überwacht werden, ohne dass hierzu Wartungspersonal abgestellt werden müsste.

Ferner ist sichergestellt, dass das Schutzgas in allen Absorberrohren unter gleichen Bedingungen in den Ringraum eingeleitet wird, so dass die Sonnenkollektoren nicht über einen längeren Zeitraum unnötig unterhalb des eigentlich erreichbaren möglichen Wirkungsgrades betrieben werden.

Ein nicht zum Gegenstand der Ansprüche gehörendes Verfahren zum Einleiten von Schutzgas in einen Ringraum eines Absorberrohres, umfasst folgende Schritte:
- Ermitteln des Temperaturwertes des Hüllrohres mittels einer Temperaturmesseinheit,
- Vergleichen des ermittelten Temperaturwertes des Hüllrohres mit einem wählbaren kritischen Temperaturwertes mittels einer Vergleichseinheit, und
- Aktivieren einer Öffnungseinheit und Freigeben der Auslassöffnungen und Einleiten von Schutzgas in den Ringraum für den Fall, dass der ermittelte Temperaturwert den kritischen Temperaturwert übersteigt.

Das Verfahren wird vorzugsweise in der angegebenen Abfolge durchgeführt, jedoch sind auch andere Abfolgen denkbar. Die Vorteile dieses Verfahrens decken sich mit denen, die für die entsprechende erfindungsgemäße Vorrichtung zum Einleiten von Schutzgas in einen Ringraum eines Absorberrohres diskutiert wurden.

Ferner betrifft ein zusätzlicher Aspekt einen Sonnenkollektor, umfassend einen Kollektorspiegel und ein Absorberrohr nach einem der Ansprüche 1 bis 11. Eine weitere Ausgestaltung des erfindungsgemäßen Sonnenkollektors umfasst weiterhin eine Vorrichtung zum Einleiten von Schutzgas in einen Ringraum des Absorberrohres nach Anspruch 12.

Die Erfindung wird nun in Detail anhand von bevorzugten Ausführungsbeispielen unter Bezugnahme auf die Figuren beschrieben.

Es zeigen:
- Figur 1: eine schematische Darstellung eines Sonnenkollektors,
- Figur 2: ein erstes Ausführungsbeispiel eines Absorberrohres in einer Halbschnittdarstellung,
- Figur 3: ein zweites Ausführungsbeispiel eines Absorberrohres in einer Halbschnittdarstellung,
- Figur 4: ein drittes Ausführungsbeispiel eines Absorberrohres in einer Schnittdarstellung,
- Figur 5: ein viertes Ausführungsbeispiel eines Absorberrohres in einer Halbschnittdarstellung,
- Figur 6: ein Ausführungsbeispiel des erfindungsgemäßen Absorberrohres in einer Halbschnittdarstellung,
- Figur 7: ein fünftes Ausführungsbespiel eines Absorberrohres in einer Halbschnittdarstellung,
- Figur 8: eine schematische Darstellung einer Vorrichtung zum Einleiten von Schutzgas in einen Ringraum eines Absorberrohres,
- Figur 9: eine isolierte Darstellung eines Übergangselementes,
- Figur 10: eine Schnittdarstellung durch ein erstes Ausführungsbeispiel eines erfindungsgemäßen ersten Behälters und eines erfindungsgemäßen zweiten Behälters entlang der in Figur 5 definierten Ebene A-A, und
- Figur 11: eine Schnittdarstellung durch ein zweites Ausführungsbeispiel eines ersten und eines zweiten erfindungsgemäßen Behälters entlang der in Figur 5 definierten Ebene A-A.

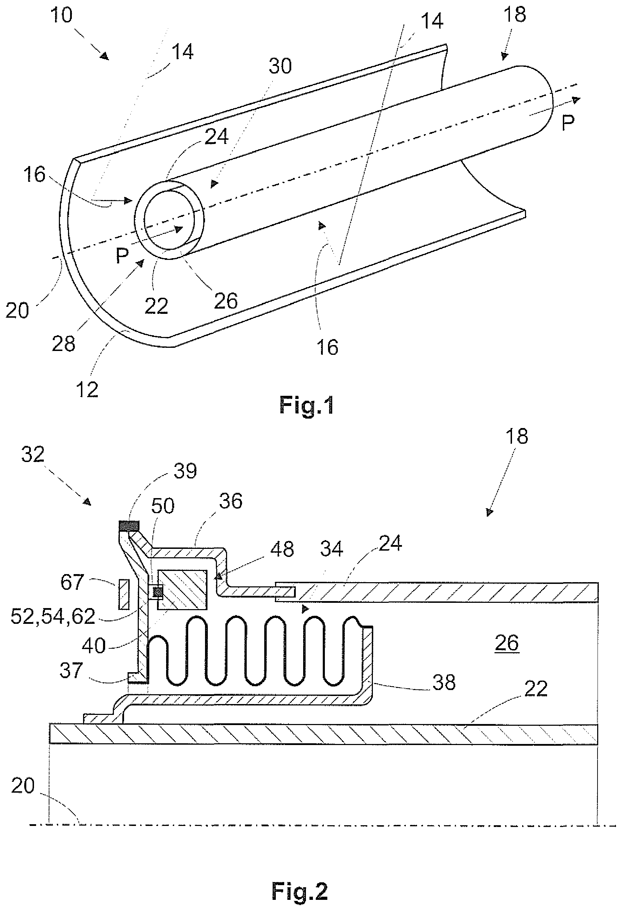

In Figur 1 ist ein Sonnenkollektor 10 der bekannten Art dargestellt. Der Sonnenkollektor 10 umfasst einen Kollektorspiegel 12, welcher die Sonneneinstrahlung 14 reflektiert und die reflektierte Sonneneinstrahlung 16 auf ein Absorberrohr 18 richtet. Der Kollektorspiegel 12 ist rinnenförmig ausgestaltet, so dass er eine Fokussierung der reflektierten Sonnenstrahlung entlang einer Brennlinie bewirkt, durch die eine Längsachse 20 des Absorberrohres 18 verläuft. Das Absorberrohr 18 weist ein Metallrohr 22 und ein Hüllrohr 24 auf. Das Metallrohr 22 ist mit einer strahlungsabsorbierenden Schicht beschichtet und wird von einem Wärmeträgermedium durchströmt. Das Hüllrohr 24 umschließt das Metallrohr 22, so dass ein Ringraum 26 zwischen dem Metallrohr 22 und dem Hüllrohr 24 gebildet wird. Das Hüllrohr 24 besteht typischerweise aus Glas. Aufgrund der rinnenförmigen Ausgestaltung des Kollektorspiegels 12 kann das Absorberrohr 18 in eine dem Kollektorspiegel 12 zugewandte Hälfte 28 und eine ihm abgewandte Hälfte 30 unterteilt werden.

Die Strömungsrichtung des Wärmeträgermediums ist durch die Pfeile P angedeutet. Beim Durchströmen des Metallrohres 22 wird das Wärmeträgermedium durch die reflektierte Sonnenstrahlung 16 erhitzt. Die erreichbare Temperatur beträgt ca. 400°C. Das erhitzte Wärmeträgermedium wird einem hier nicht näher dargestellten Prozess zugeführt, in dem elektrische Energie gewonnen wird. Die dem Kollektorspiegel 12 abgewandte Hälfte 30 des Absorberrohres 18 wird durch Mischkonvektion, also durch natürliche Konvektion, und beispielsweise durch Wind erzwungene Konvektion abgekühlt, was zu Wärmeverlusten führt und daher den Erhitzungsprozess des Wärmeträgermediums verschlechtert. Daher ist man bestrebt, die Wärmeleitung vom Metallrohr 22 nach außen so weit wie möglich zu reduzieren, was mithilfe des mit dem Hüllrohr 24 gebildeten Ringraumes 26 geschieht. Dieser ist zunächst evakuiert und kann erfindungsgemäß im Betrieb durch Öffnen des ersten Behälters 40 mit einem Schutzgas befüllt werden. Sowohl der evakuierte als auch der mit einem Schutzgas befüllte Ringraum 26 weisen eine verringerte Wärmeleitung auf, wodurch die Wärmeverluste begrenzt werden.

In Figur 2 ist ein erstes Ausführungsbeispiel eines Absorberrohres 18 in einer Halbschnittdarstellung gezeigt. Das Absorberrohr 18 weist eine Dehnungsausgleichseinheit 32 zum Ausgleichen der Ausdehnungen des Hüllrohres und des Metallrohres und zum gasdichten Abdichten des Ringraumes 26 im Betrieb des Sonnenkollektors 10 auf.

Die infolge der unterschiedlichen Ausdehnungen entstehenden Relativbewegungen zwischen dem Hüllrohr 24 und dem Metallrohr 22 werden mithilfe eines Faltenbalges 34 ausgeglichen. Die Ausdehnungen des Hüllrohres 24 werden dabei über ein Übergangselement 36 und einen Außenring 37 auf den Faltenbalg 34 übertragen, während die Ausdehnungen des Metallrohres 22 über ein Anschlusselement 38 auf den Faltenbalg 34 übertragen werden. Der Außenring 37 ist mit dem Übergangselement 36 mithilfe einer Schweißnaht 39 verbunden.

Das Absorberrohr umfasst einen ersten, mit Schutzgas gefüllten Behälter 40. Der erste Behälter 40 ist über eine Haltevorrichtung 50 am Außenring 37 befestigt und weist eine Auslassöffnung 52 auf, die mit einem Verschlussmaterial 54 verschlossen ist. Als Verschlussmaterial 54 kann beispielsweise metallisches Lot 62 verwendet werden, welches unter Wärmeeinwirkung geschmolzen werden kann, wodurch die Auslassöffnung 52 freigegeben und das Schutzgas in den Ringraum 26 eingeleitet wird. Als Schutzgas kann ein Edelgas wie Argon oder Xenon oder ein anderes Inertgas verwendet werden, das sich durch eine geringe Wärmeleitfähigkeit auszeichnet. Die zum Öffnen des Verschlussmaterials 54 benötigte Wärme kann beispielsweise mittels einer Öffnungseinheit 67 erzeugt werden. In diesem Fall kann die Öffnungseinheit 67 jede geeignete Vorrichtung sein, mit der Wärme erzeugt werden kann, beispielsweise eine Heizlampe oder ein Lötkolben. Die erzeugte Wärme wird über die Haltevorrichtung 50 in den ersten Behälter 40 geleitet, wo sie die Auslassöffnung 52 öffnet.

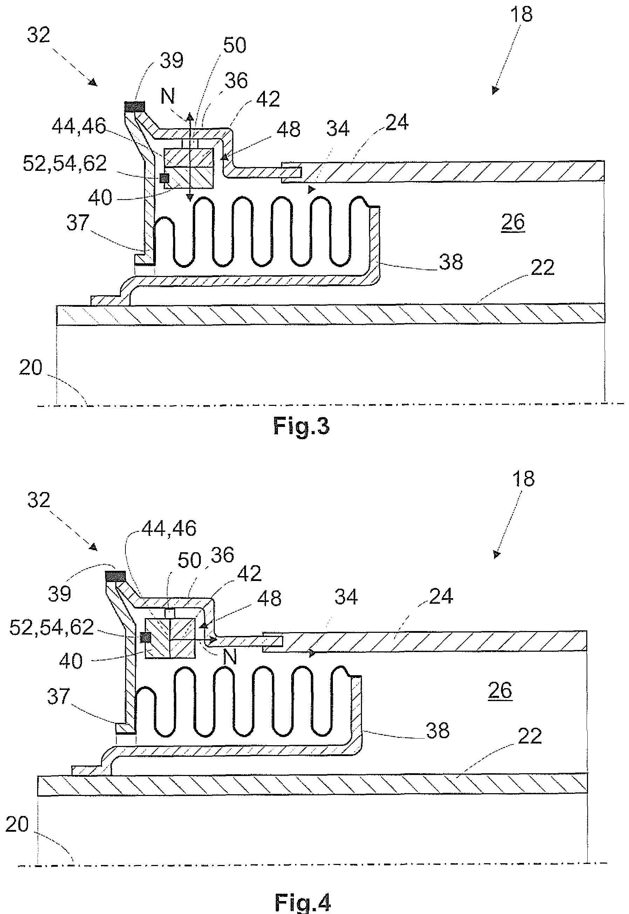

In Figur 3 ist eine zweite Ausführungsform des Absorberrohres 18 dargestellt. Zusätzlich zum ersten Behälter 40 weist das Absorberrohr 18 in dieser Ausführungsform einen zweiten mit einem Gettermaterial gefüllten zweiten Behälter 42 auf, die sich beide im Ringraum 26 befinden. Der erste Behälter 40 weist eine erste Fläche 44 und der zweite Behälter 42 eine zweite Fläche 46 auf, mit denen sie miteinander verbunden sind. Die Normalenvektoren N der ersten und der zweiten Fläche 44, 46 verlaufen dabei senkrecht zur Längsachse 20 des Absorberrohres 18.

Im dargestellten Beispiel sind beide Behälter 40, 42 als geschlossene Ringe bzw. Hohlzylinder ausgeführt, wobei der erste Behälter 40 in den zweiten Behälter 42 eingeschoben ist, so dass sie ein Bauteil 48 bilden. Das Bauteil 48 ist über den zweiten Behälter 42 mittels einer Haltevorrichtung 50 mit dem Übergangselement 36 verbunden und so im Ringraum 26 fixiert. Alternativ kann das Bauteil 48 so dimensioniert werden, dass es am Übergangselement 36 anliegt und durch Reib- und/oder Formschluss in seiner Position festgelegt ist, so dass die Haltevorrichtung 50 nicht mehr benötigt wird.

In Figur 4 ist ein drittes Ausführungsbeispiel des Absorberrohres 18 in einer Halbschnittdarstellung gezeigt. Es unterscheidet sich vom ersten Ausführungsbeispiel dadurch, dass die Normalenvektoren N der ersten und der zweiten Fläche 44, 46 parallel zur Längsachse 20 des Absorberrohres 18 verlaufen. Ferner haben die beiden Behälter 40, 42 dieselben Abmessungen und sind entlang der Längsachse 20 gesehen hintereinander angeordnet.

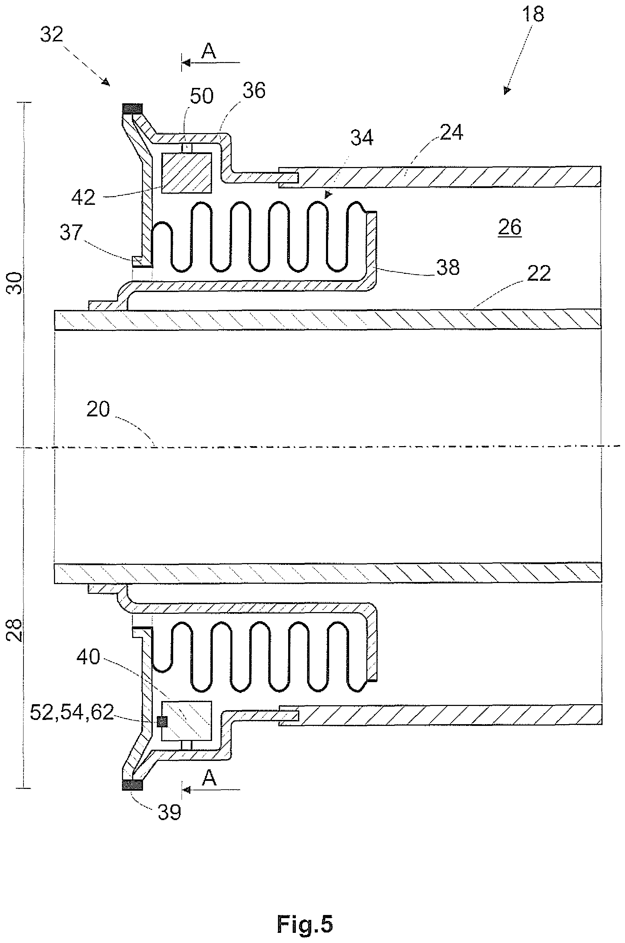

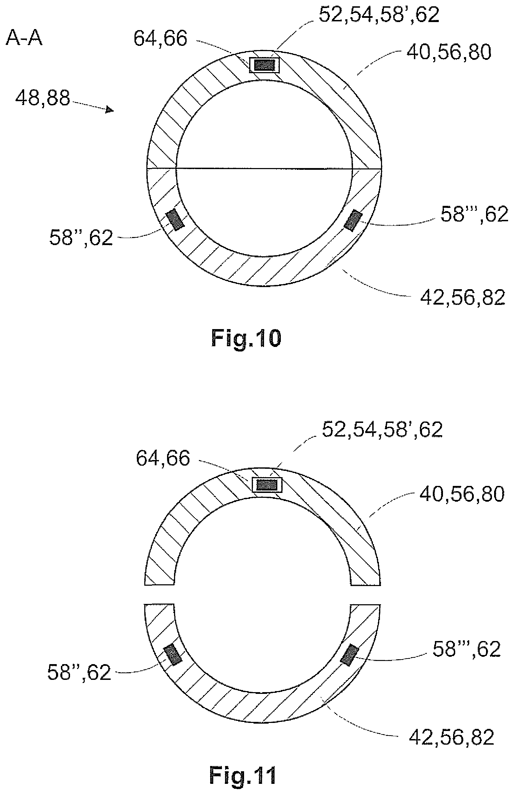

In Figur 5 ist ein viertes Ausführungsbeispiel des Absorberrohres 18 in einer Schnittdarstellung gezeigt. Hier sind die beiden Behälter 40, 42 als Halbringe 56 bzw. halbe Hohlzylinder mit gleichen Abmessungen ausgeführt (vgl. Figur 10). Ferner ist der erste Behälter 40 in der dem Kollektorspiegel 12 zugewandten Hälfte 28 und der zweite Behälter 42 in der dem Kollektorspiegel 12 abgewandten Hälfte 30 des Absorberrohres 18 angeordnet.

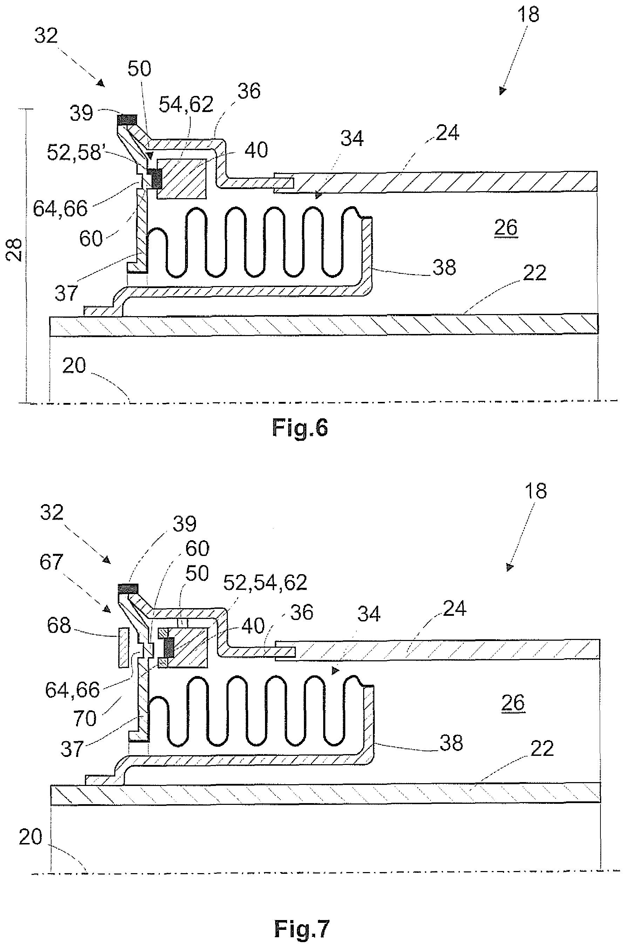

Das in Figur 6 dargestellte Ausführungsbeispiel zeigt die dem Kollektorspiegel 12 zugewandte Hälfte 28 des erfindungsgemäßen Absorberrohres 18, in welcher sich der erste Behälter 40 befindet. Abweichend von den zuvor beschriebenen Ausführungsbeispielen ist die Haltevorrichtung 50 als Lötpunkt 58 ausgeführt, mit dem der erste Behälter 40 am Außenring 37 befestigt ist. Der Außenring 37 weist hierzu einen Vorsprung 60 auf, der in die Auslassöffnung 52 hineinragt.

Als Verschlussmaterial 54 wird ein metallisches Lot 62 verwendet, welches gleichzeitig zur Befestigung des ersten Behälters 40 am Außenring 37 dient. Im Übrigen ist der erste Behälter 40 genauso aufgebaut wie im dritten Ausführungsbeispiel und auch genauso mit dem zweiten Behälter 42 (hier nicht dargestellt, vgl. Figur 10) verbunden. Insgesamt sind der erste und der zweite Behälter 40, 42 im dargestellten Beispiel mit drei Lötpunkten 58', 58" und 58"' mit dem Außenring 37 verbunden (vgl. Figur 10), allerdings verschließt nur der Lötpunkt 58' gleichzeitig auch die Auslassöffnung 52 des ersten Behälters 40. Um diesen Lötpunkt 58' zu markieren und anzuzeigen, dass an diesem die Wärmeeinwirkung zum Freigeben der Auslassöffnung 52 zu erfolgen hat, weißt der Außenring 37 an dieser Stelle eine Markierung 64 auf, hier als Ausnehmung 66 ausgeführt. Wird der Lötpunkt 58' geöffnet, sind der erste und der zweite Behälter 40, 42 durch die Lötpunkte 58" und 58"' immer noch ausreichend befestigt (vgl. Figur 10).

Im fünften Ausführungsbeispiel, welches in Figur 7 dargestellt ist, sind der erste und der (nicht dargestellte) zweite Behälter 40, 42 mit der Haltevorrichtung 50 am Übergangselement 36 befestigt. Das Absorberrohr 18 weist eine Öffnungseinheit 67 zum Freigeben der Auslassöffnungen 52 auf, die eine außerhalb des Ringraums 26 angeordnete elektrische Spule 68 und eine Metallscheibe 70 umfasst, mit denen das Verschlussmaterial 54 induktiv erwärmt und die Auslassöffnung 52 geöffnet werden kann. Auch hier kann der Außenring 37 mit der Ausnehmung 66 zum Markieren der Auslassöffnung 52 versehen werden, damit die elektrische Spule 68 in der korrekten Position angebracht wird.

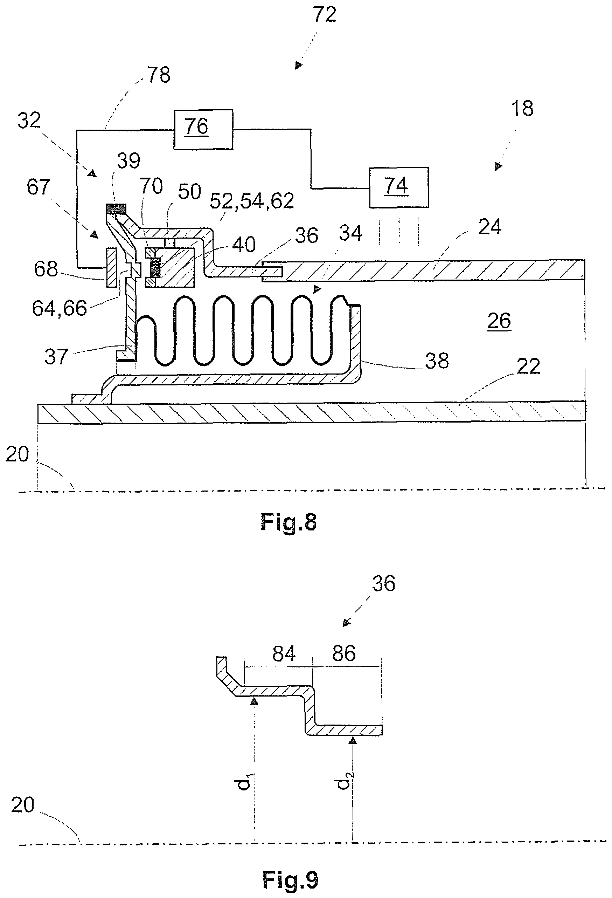

In Figur 8 ist eine Vorrichtung 72 zum Einleiten von Schutzgas in einen Ringraum 26 eines Absorberrohres 18 schematisch dargestellt. Sie umfasst hier das Absorberrohr 18, wie es in Figur 7 dargestellt ist. Zusätzlich umfasst sie eine Temperaturmesseinheit 74 und eine Vergleichseinheit 76, die über elektrische Kabel 78 miteinander und mit der elektrischen Spule 68 der Öffnungseinheit 67 verbunden sind. Eine kabellose oder drahtlose Verbindung ist ebenfalls denkbar. Die Temperaturmesseinheit 74 kann als Wärmebildkamera oder als Temperatursensor ausgeführt sein und ermittelt den Temperaturwert des Hüllrohres 24. Dieser Temperaturwert wird der Vergleichseinheit 76 übermittelt, welche als Computer ausgeführt sein kann. Diese vergleicht den ermittelten Temperaturwert mit einem wählbaren und in die Vergleichseinheit 76 eingebbaren kritischen Temperaturwert. Übersteigt der ermittelte Temperaturwert den kritischen Temperaturwert, aktiviert die Vergleichseinheit 76 die elektrische Spule 68 der Öffnungseinheit 67, so dass der erste Behälter 40 geöffnet und das Schutzgas in den Ringraum 26 des Absorberrohres 18 eingeleitet wird.

In Figur 9 ist das Übergangselement 36 isoliert dargestellt. Es weißt einen ersten Bereich 84 mit einem ersten Durchmesser d₁ und einen zweiten Bereich 86 mit einem zweiten Durchmesser d₂ auf. Durch diese Gestaltung des Übergangselements 36 wird eine erhöhte Steifigkeit erreicht, so dass die Belastung der Verbindung zwischen dem Übergangselement 36 und dem Hüllrohr 24 infolge des Wärmeeintrages sowohl im Betrieb des Sonnenkollektors 10 als auch beim Verschweißen des Übergangselements 36 mit dem Außenring 37 verringert wird.

In den Figuren 10 und 11 sind verschiedene Ausführungsbeispiele des ersten und des zweiten Behälter 40, 42 im Querschnitt entlang der in Figur 5 definierten Schnittebene A-A dargestellt. Der Querschnitt der beiden Behälter 40, 42 entlang den Schnittebenen der Figuren 2 bis 7 kann kreisförmig oder mehreckig sein. In Figur 10 sind der erste Behälter 40 als ein erster Ringabschnitt 80 und der zweite Behälter 42 als ein zweiter Ringabschnitt 82 ausgeführt, hier als zwei gleich große Halbringe 56, die zusammen einen geschlossenen Ring 88 bilden. Andere Ausführungen sind ebenfalls denkbar, beispielsweise derart, dass der erste Ringabschnitt 80 als Viertelring und der zweite Ringabschnitt 82 als Dreiviertelring gestaltet sind. Eine Unterteilung in mehr als zwei Behälter bzw. mehr als zwei Ringabschnitte ist ebenfalls möglich.

In Figur 11 ist der Fall dargestellt, dass zwar der erste Behälter 40 und der zweite Behälter 42 jeweils als Halbringe 56 ausgeführt sind und den ersten Ringabschnitt 80 und den zweiten Ringabschnitt 82 bilden, aber nicht miteinander verbunden sind. Sie müssen dann jeweils einzeln im Ringraum 26 fixiert werden.

Sich für den Fachmann aus der Beschreibung in naheliegender Weise ergebende Modifikationen oder Variationen weichen von der der Erfindung zugrundeliegenden Idee nicht ab und sind vom Schutzumfang umfasst, der von folgenden Ansprüchen definiert wird.

### Bezugszeichenliste

- 10: Sonnenkollektor
- 12: Kollektorspiegel
- 14: Sonneneinstrahlung
- 16: reflektierte Sonneneinstrahlung
- 18: Absorberrohr

- 20: Längsachse
- 22: Metallrohr
- 24: Hüllrohr
- 26: Ringraum
- 28: dem Kollektorspiegel zugewandet Hälfte des Absorberrohres

- 30: dem Kollektorspiegel abgewandte Hälfte des Absorberrohres
- 32: Dehnungsausgleichseinheit
- 34: Faltenbalg
- 36: Übergangselement
- 37: Außenring
- 38: Anschlusselement
- 39: Schweißnaht

- 40: erster Behälter
- 42: zweiter Behälter
- 44: erste Fläche
- 46: zweite Fläche
- 48: Bauteil

- 50: Haltevorrichtung
- 52: Auslassöffnung
- 54: Verschlussmaterial
- 56: Halbring
- 58: Lötpunkt

- 60: Vorsprung
- 62: metallisches Lot
- 64: Markierung
- 66: Ausnehmung
- 67: Öffnungseinheit
- 68: elektrische Spule

- 70: Metallscheibe
- 72: Vorrichtung zum Einleiten von Schutzgas in einen Ringraum eines Absorberrohres
- 74: Temperaturmesseinheit
- 76: Vergleichseinheit
- 78: Kabel

- 80: erster Ringabschnitt
- 82: zweiter Ringabschnitt
- 84: erster Bereich
- 86: zweiter Bereich
- 88: geschlossener Ring

- d₁: erster Durchmesser
- d₂: zweiter Durchmesser
- N: Normalenvektor

## Patentansprüche

1. Absorberrohr, insbesondere für Sonnenkollektoren (10) in solarthermischen Kraftwerken mit mindestens einem Kollektorspiegel (12), umfassend
- ein Metallrohr (22) zum Durchleiten und Erhitzen eines Wärmeträgermediums,
- ein das Metallrohr (22) umgebendes Hüllrohr (24) zum Ausbilden eines evakuierbaren Ringraumes (26),
- einen ersten, im Ringraum (26) angeordneten und mit Schutzgas befüllten Behälter (40), wobei der erste Behälter (40) eine Auslassöffnung (52) aufweist, die mit einem Verschlussmaterial (54) verschlossen ist, welches die Auslassöffnung (52) unter äußerer Einwirkung zum Einleiten des Schutzgases in den Ringraum (26) freigibt, wobei die äußere Einwirkung von einer aktivierbaren Öffnungseinheit (67) zum Freigeben der Auslassöffnungen (52) aufbringbar ist, und
- einen Außenring (37) und ein Übergangselement (36), die das Metallrohr (22) zum Abdichten des Ringraums (26) umschließen,
**dadurch gekennzeichnet, dass** der erste Behälter (40) mittels einer Haltevorrichtung (50) im Ringraum (26) fixiert ist, wobei die Haltevorrichtung (50) am Außenring (37) und/oder am Übergangselement (36) angeordnet ist,
wobei die Haltevorrichtung (50) ein oder mehrere Lötpunkte (58) aus metallischem Lot (62) umfasst, und
dass mindestens einer der Lötpunkte (58) zum Fixieren des ersten Behälters (40) im Ringraum (26) auch die Auslassöffnung (52) verschließt.

2. Absorberrohr nach einem der vorherigen Ansprüche,
**gekennzeichnet durch** einen zweiten, mit einem Gettermaterial zum Binden von freiem Wasserstoff gefüllten und im Ringraum (26) angeordneten Behälter (42).

3. Absorberrohr nach Anspruch 2,
**dadurch gekennzeichnet, dass** der zweite Behälter (42) mittels der Haltevorrichtung (50) im Ringraum (26) fixiert ist.

4. Absorberrohr nach Anspruch 2 oder 3,
**dadurch gekennzeichnet, dass** der Außenring (37) ein oder mehrere in den Ringraum (26) hineinragende Vorsprünge (60) zum Positionieren des ersten und/oder des zweiten Behälters (40, 42) aufweist, und
dass einer der Vorsprünge (60) in die Auslassöffnung (52) des ersten Behälters (40) hineinragt und mit einer Markierung (64) zum Kennzeichnen der Auslassöffnung (52) versehen ist.

5. Absorberrohr nach einem der Ansprüche 2 bis 4,
**dadurch gekennzeichnet, dass** der erste Behälter (40) und der zweite Behälter (42) ringförmig ausgestaltet sind und das Metallrohr (22) umgeben.

6. Absorberrohr nach Anspruch 5,
**dadurch gekennzeichnet, dass** der erste Behälter (40) eine erste Fläche (44) und der zweite Behälter (42) eine zweite Fläche (46) aufweisen, an denen der erste und der zweite Behälter (40, 42) zu einem Bauteil (48) verbindbar sind.

7. Absorberrohr nach Anspruch 6, wobei das Absorberrohr (18) eine Längsachse (20) aufweist,
**dadurch gekennzeichnet, dass** die erste Fläche (44) und die zweite Fläche (46) sich radial zur Längsachse (20) erstrecken.

8. Absorberrohr nach Anspruch 6, wobei das Absorberrohr (18) eine Längsachse (20) aufweist,
**dadurch gekennzeichnet, dass** die erste Fläche (44) und die zweite Fläche (46) parallel zur Längsachse (20) verlaufen.

9. Absorberrohr nach einem der Ansprüche 5 bis 8,
**dadurch gekennzeichnet, dass** der erste Behälter (40) als ein erster Ringabschnitt (80) und der zweite Behälter (42) als ein zweiter Ringabschnitt (82) ausgestaltet und miteinander zu einem geschlossenen Ring (88) verbindbar sind.

10. Absorberrohr nach einem der Ansprüche 5 bis 8,
**dadurch gekennzeichnet, dass** der erste Behälter (40) einei oder mehrere erste Ringabschnitte (80) und der zweite Behälter (42) einen oder mehrere zweite Ringabschnitt (82) aufweist, die separat voneinander im Ringraum (26) fixierbar sind.

11. Absorberrohr (18) nach Anspruch 9 oder 10,
**dadurch gekennzeichnet, dass** der erste Ringabschnitt (80) und der zweite Ringabschnitt (82) als Halbringe (56) ausgestaltet sind.

12. Vorrichtung zum Einleiten von Schutzgas in einen Ringraum (26) eines Absorberrohres (18), umfassend
- ein Absorberrohr (18) nach einem der vorherigen Ansprüche,
- eine Temperaturmesseinheit (74) zum Ermitteln des Temperaturwertes eines Hüllrohres (24),
- eine Vergleichseinheit (76) zum Vergleichen des ermittelten Temperaturwertes des Hüllrohres (24) mit einem wählbaren kritischen Temperaturwert, und
- eine von der Vergleichseinheit (76) aktivierbare Öffnungseinheit (67) zum Freigeben der Auslassöffnungen zum Einleiten von Schutzgas in den Ringraum (26).

13. Sonnenkollektor, umfassend
- einen Kollektorspiegel (12), und
- ein Absorberrohr (18) nach einem der Ansprüche 1 bis 11.

## Claims

1. Absorber tube, in particular for solar collectors (10) in solar thermal power plants, having at least one collector mirror (12), comprising
- a metal tube (22) for conducting and heating a heat carrier medium,
- an envelope tube (24) which surrounds the metal tube (22) and which serves to form an evacuable annular space (26),
- a first container (40) which is arranged in the annular space (26) and which is filled with inert gas, wherein the first container (40) has an outlet opening (52) which is closed off by means of a closure material (54) which, under external action, opens up the outlet opening (52) for the introduction of the inert gas into the annular space (26), wherein the external action can be imparted by an activatable opening unit (67) for opening up the outlet opening (52), and
- an outer ring (37) and a transition element (36) which surround the metal tube (22) for the purpose of the sealing off of the annular space (26),
**characterized in that** the first container (40) is fixed in the annular space (26) by means of a retention device (50),
wherein the retention device (50) is arranged on the outer ring (37) and/or on the transition element (36),
wherein the retention device (50) comprises one or more braze points (58) formed from metallic braze (62), and
**in that** at least one of the braze points (58) for fixing the first container (40) in the annular space (26) also closes off the outlet opening (52).

2. Absorber tube according to one of the preceding claims, **characterized by** a second container (42) which is filled with a getter material for binding free hydrogen and which is arranged in the annular space (26).

3. Absorber tube according to Claim 2, **characterized in that** the second container (42) is fixed in the annular space (26) by means of the retention device (50).

4. Absorber tube according to Claim 2 or 3, **characterized in that** the outer ring (37) has one or more projections (60), which project(s) into the annular space (26), for the positioning of the first and/or second container(s) (40, 42), and
**in that** one of the projections (60) projects into the outlet opening (52) of the first container (40) and is equipped with a marking (64) for identifying the outlet opening (52).

5. Absorber tube according to one of Claims 2 to 4, **characterized in that** the first container (40) and the second container (42) are of annular design and surround the metal tube (22).

6. Absorber tube according to Claim 5, **characterized in that** the first container (40) has a first surface (44) and the second container (42) has a second surface (46), at which surfaces the first and second containers (40, 42) can be connected to form one component (48).

7. Absorber tube according to Claim 6, wherein the absorber tube (18) has a longitudinal axis (20), **characterized in that** the first surface (44) and the second surface (46) extend radially with respect to the longitudinal axis (20).

8. Absorber tube according to Claim 6, wherein the absorber tube (18) has a longitudinal axis (20), **characterized in that** the first surface (44) and the second surface (46) run parallel to the longitudinal axis (20).

9. Absorber tube according to one of Claims 5 to 8, **characterized in that** the first container (40) is configured as a first ring section (80) and the second container (42) is configured as a second ring section (82), and said containers can be connected to one another to form a closed ring (88).

10. Absorber tube according to one of Claims 5 to 8, **characterized in that** the first container (40) has one or more first ring sections (80), and the second container (42) has one or more second ring sections (82), which can be fixed separately from one another in the annular space (26).

11. Absorber tube (18) according to Claim 9 or 10, **characterized in that** the first ring section (80) and the second ring section (82) are configured as half-rings (56).

12. Device for introducing inert gas into an annular space (26) of an absorber tube (18), comprising
- an absorber tube (18) according to one of the preceding claims,
- a temperature measurement unit (74) for determining the temperature value of an envelope tube (24),
- a comparison unit (76) for comparing the determined temperature value of the envelope tube (24) with a selectable critical temperature value, and
- an opening unit (67), which can be activated by the comparison unit (76), for opening up the outlet openings for the introduction of inert gas into the annular space (26).

13. Solar collector comprising
- a collector mirror (12) and
- an absorber tube (18) according to one of Claims 1 to 11.

## Revendications

1. Tuyau absorbeur, en particulier pour collecteurs solaires (10) dans des centrales thermiques solaires, comprenant au moins un miroir de collecteur (12), comprenant
- un tube métallique (22) pour conduire et chauffer un fluide caloporteur,
- un tube d'enveloppe (24) entourant le tube métallique (22) pour constituer un espace annulaire (26) pouvant être évacué,
- un premier récipient (40) disposé dans l'espace annulaire (26) et rempli de gaz protecteur, le premier récipient (40) présentant une ouverture de sortie (52) qui est fermée avec un matériau de fermeture (54) qui libère l'ouverture de sortie (52) par action extérieure pour introduire le gaz protecteur dans l'espace annulaire (26), l'action extérieure pouvant être effectuée par une unité d'ouverture activable (67) pour libérer les ouvertures de sortie (52), et
- une bague extérieure (37) et un élément de transition (36) qui entourent le tube métallique (22) pour étanchéifier l'espace annulaire (26),
**caractérisé en ce que** le premier récipient (40) est fixé au moyen d'un dispositif de retenue (50) dans l'espace annulaire (26), le dispositif de retenue (50) étant disposé au niveau de la bague extérieure (37) et/ou au niveau de l'élément de transition (36), le dispositif de retenue (50) comprenant un ou plusieurs points de brasage (58) en brasure métallique (62), et
**en ce qu'**au moins l'un des points de brasage (58) pour fixer le premier récipient (40) dans l'espace annulaire (26) ferme également l'ouverture de sortie (52).

2. Tuyau absorbeur selon l'une quelconque des revendications précédentes,
**caractérisé par** un deuxième récipient (42) rempli avec un matériau getter pour lier l'hydrogène libre et disposé dans l'espace annulaire (26).

3. Tuyau absorbeur selon la revendication 2, **caractérisé en ce que** le deuxième récipient (42) est fixé dans l'espace annulaire (26) au moyen du dispositif de retenue (50).

4. Tuyau absorbeur selon la revendication 2 ou 3, **caractérisé en ce que** la bague extérieure (37) présente une ou plusieurs saillies (60) pénétrant dans l'espace annulaire (26) pour le positionnement du premier et/ou du deuxième récipient (40, 42), et
**en ce que** l'une des saillies (60) pénètre dans l'ouverture de sortie (52) du premier récipient (40) et est pourvue d'un marquage (64) pour marquer l'ouverture de sortie (52).

5. Tuyau absorbeur selon l'une quelconque des revendications 2 à 4, **caractérisé en ce que** le premier récipient (40) et le deuxième récipient (42) sont réalisés sous forme annulaire et entourent le tube métallique (22).

6. Tuyau absorbeur selon la revendication 5, **caractérisé en ce que** le premier récipient (40) présente une première surface (44) et le deuxième récipient (42) présente une deuxième surface (46) au niveau desquelles le premier et le deuxième récipient (40, 42) peuvent être connectés pour former un composant (48).

7. Tuyau absorbeur selon la revendication 6, dans lequel le tuyau absorbeur (18) présente un axe longitudinal (20),
**caractérisé en ce que** la première surface (44) et la deuxième surface (46) s'étendent radialement par rapport à l'axe longitudinal (20).

8. Tuyau absorbeur selon la revendication 6, dans lequel le tuyau absorbeur (18) présente un axe longitudinal (20),
**caractérisé en ce que** la première surface (44) et la deuxième surface (46) s'étendent parallèlement à l'axe longitudinal (20).

9. Tuyau absorbeur selon l'une quelconque des revendications 5 à 8,
**caractérisé en ce que** le premier récipient (40) est réalisé sous forme de première portion annulaire (80) et le deuxième récipient (42) est réalisé sous forme de deuxième portion annulaire (82) et ils peuvent être connectés l'un à l'autre pour former une bague fermée (88).

10. Tuyau absorbeur selon l'une quelconque des revendications 5 à 8,
**caractérisé en ce que** le premier récipient (40) présente une ou plusieurs premières portions annulaires (80) et le deuxième récipient (42) présente une ou plusieurs deuxièmes portions annulaires (82) qui peuvent être fixées séparément les unes des autres dans l'espace annulaire (26).

11. Tuyau absorbeur (18) selon la revendication 9 ou 10,
**caractérisé en ce que** la première portion annulaire (80) et la deuxième portion annulaire (82) sont configurées sous forme de demi-bagues (56).

12. Dispositif pour introduire un gaz protecteur dans un espace annulaire (26) d'un tuyau absorbeur (18), comprenant
- un tuyau absorbeur (18) selon l'une quelconque des revendications précédentes,
- une unité de mesure de température (74) pour déterminer la valeur de la température d'un tube d'enveloppe (24),
- une unité de comparaison (76) pour comparer la valeur de température déterminée du tube d'enveloppe (24) avec une valeur de température critique sélectionnable, et
- une unité d'ouverture (67) pouvant être activée par l'unité de comparaison (76) pour libérer les ouvertures de sortie pour introduire du gaz protecteur dans l'espace annulaire (26).

13. Collecteur solaire, comprenant
- un miroir de collecteur (12), et
- un tuyau absorbeur (18) selon l'une quelconque des revendications 1 à 11.
